# FASCICULE DE BREVET EUROPEEN

(11) **EP 2 445 767 B1**
(45) Date de publication et mention de la délivrance du brevet: **19.06.2013**
(21) Numéro de dépôt: 10726079.6
(22) Date de dépôt: 21.06.2010
(51) Int. Cl.: B60T 13/74

(54) **SYSTEME DE FREINS A SERVOFREIN ELECTRIQUE**
BREMSSYSTEM MIT ELEKTRISCHEM BREMSVERSTÄRKER
BRAKING SYSTEM WITH ELECTRIC BRAKE BOOSTER

(30) Priorité: 25.06.2009 FR 0903104
(43) Date de publication de la demande: 02.05.2012
(73) Titulaire: Robert Bosch GmbH, 70442 Stuttgart (DE)
(72) Inventeur: RICHARD, Philippe, F-77500 Chelles (FR); GAFFE, François, F-93140 Bondy (FR); CAGNAC, Bastien, F-60660 Cramoisy (FR)
(86) Numéro de dépôt international: PCT/EP2010/058731
(87) Numéro de publication internationale: WO 2010/149621

(56) Documents cités:
- DE-A1-102006 030 168
- DE-A1-102008 038 320
- FR-A1- 2 860 474

## Description

### Domaine de l'invention

La présente invention concerne un système de freins comprenant un servofrein à moteur électrique entraînant la tige de poussée du piston du maître-cylindre par une liaison par une vis à billes et actionné par une tige de commande.

### Etat de la technique

On connaît des systèmes de freins à maître-cylindre assisté par un servofrein électrique avec une vis à billes en ligne mais ces systèmes de freins ont l'inconvénient, à cause du piston d'assistance, d'avoir un diamètre relativement important et de ce fait, d'être coûteux à cause de la taille de la vis à billes. De plus, leur montage est compliqué.

Le document DE 10 2006 030 168 A1 montre un système de freins comprenant un servofrein à moteur électrique.

### But de l'invention

La présente invention a pour but de développer un système de freins à servofrein électrique simple permettant de réduire le coût de fabrication et de faciliter le fonctionnement du système en mode de défaillance de l'assistance pour réduire les efforts à exercer pour freiner en cas de défaillance de l'assistance.

### Exposé et avantages de l'invention

A cet effet, la présente invention concerne un système de freins d'après la revendication 1.

Ce système de freins a l'avantage de permettre l'entraînement par une vis à billes de diamètre réduit car déportée de l'axe du maître-cylindre et non soumise aux contraintes dimensionnelles du maître-cylindre et aux contraintes dimensionnelles du piston d'assistance, les colonnes de guidage permettent au piston de l'actionneur de fonctionner par une liaison à glissière efficace pour le guider et simple à réaliser.

Cette solution est d'autant plus avantageuse que selon une autre caractéristique de l'invention, les deux colonnes de guidage parallèles à l'axe du système sont constituées par des tirants traversant le boîtier du servofrein pour fixer d'un côté le maître-cylindre sur le servofrein et de l'autre, l'ensemble constitué par le maître-cylindre et le servofrein au tablier du véhicule.

Suivant une autre caractéristique avantageuse, l'alésage du piston d'actionneur comporte un épaulement à son entrée côté avant et le piston d'assistance comporte une collerette d'appui pour être poussée dans le sens du freinage par le piston d'actionnement.

Ce moyen d'entraînement a l'avantage d'être très peu encombrant et de s'intégrer parfaitement dans la forme du piston d'actionneur, d'autant plus que selon une autre caractéristique, le piston d'actionneur a un corps de section sensiblement triangulaire dans un plan perpendiculaire à l'axe dont le sommet est occupé par l'écrou de la vis à billes et les extrémités de la base, par des manchons de guidage coulissant sur les colonnes de guidage.

Suivant une autre caractéristique avantageuse, le servofrein comporte un boîtier formé d'un fond et d'un couvercle et les tirants comportent un épaulement et une collerette près de chacune des extrémités au-delà de la partie formant la colonne de guidage pour s'appuyer d'un côté contre l'intérieur du couvercle et de l'autre, contre l'intérieur du fond et ces tirants se poursuivent au-delà de l'épaulement et de la collerette par des parties filetées.

Ainsi, le boîtier du servofrein est maintenu parfaitement bloqué par les tirants, son fond et la bride du maître-cylindre.

Suivant une autre caractéristique, le piston d'assistance comporte un moyeu avec un manchon cylindrique dans l'axe recevant le piston plongeur.

Suivant une autre caractéristique, une coupelle à ressort accrochée à l'extrémité arrière du piston d'assistance pour un ressort de rappel du piston plongeur, ce ressort s'appuyant également sur une collerette formant butée solidaire de la tige de commande pour rappeler le piston plongeur en appui arrière définissant le saut par rapport au disque de réaction lorsque le servofrein est en position de repos.

Suivant une autre caractéristique, les deux colonnes de guidage sont symétriques par rapport à l'axe.

De façon générale, l'utilisation des tirants comme colonnes de guidage et les deux ressorts de rappel, qui exercent une charge réduite sur le piston d'actionneur, permet un fonctionnement parfaitement régulier du piston d'actionneur par sa liaison à glissière avec les colonnes de guidage et son entraînement par l'écrou porté par la vis du système de vis à billes, cette vis servant également de troisième glissière de guidage.

Cela permet également de réduire l'effort de passage en mode de secours, en cas de défaillance du servofrein électrique.

### Dessins

La présente invention sera décrite ci-après de manière plus détaillée à l'aide d'un exemple de réalisation d'un système de freins à maître-cylindre assisté par un servofrein électrique représenté schématiquement dans les dessins annexés dans lesquels :
- la figure 1 est une vue en perspective du système de freins, vu de l'avant à partir du côté du maître-cylindre tandem,
- la figure 2 est une vue en coupe par le plan médian du système de freins selon la figure 1,
- la figure 3 est une coupe vue, à partir du côté du maître-cylindre montrant la vis à billes du servofrein,
- la figure 4 est une vue de face du système de freins montrant le côté avant,
- la figure 5 est une vue en coupe axiale, selon le plan vertical V-V de la figure 4,
- la figure 6 est une vue en coupe selon le plan médian VI-VI de la figure 4.

### Description d'un mode de réalisation de l'invention

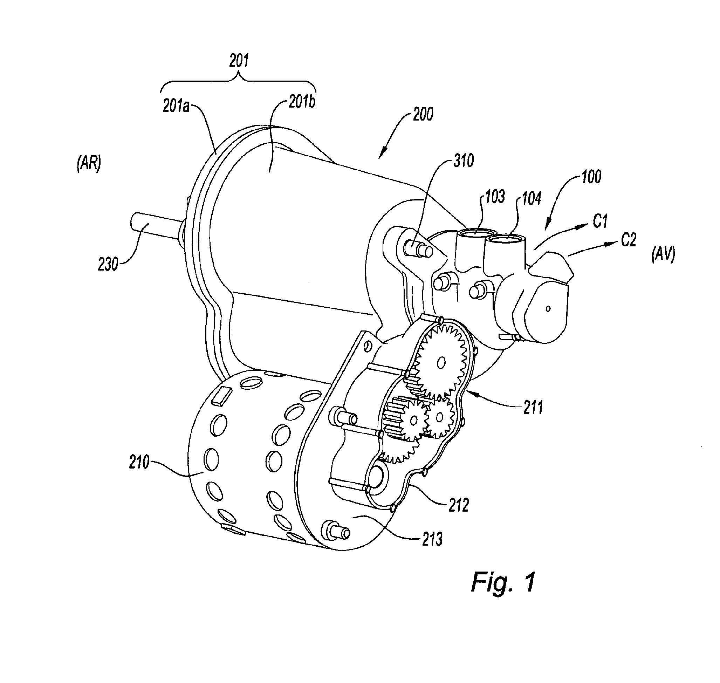

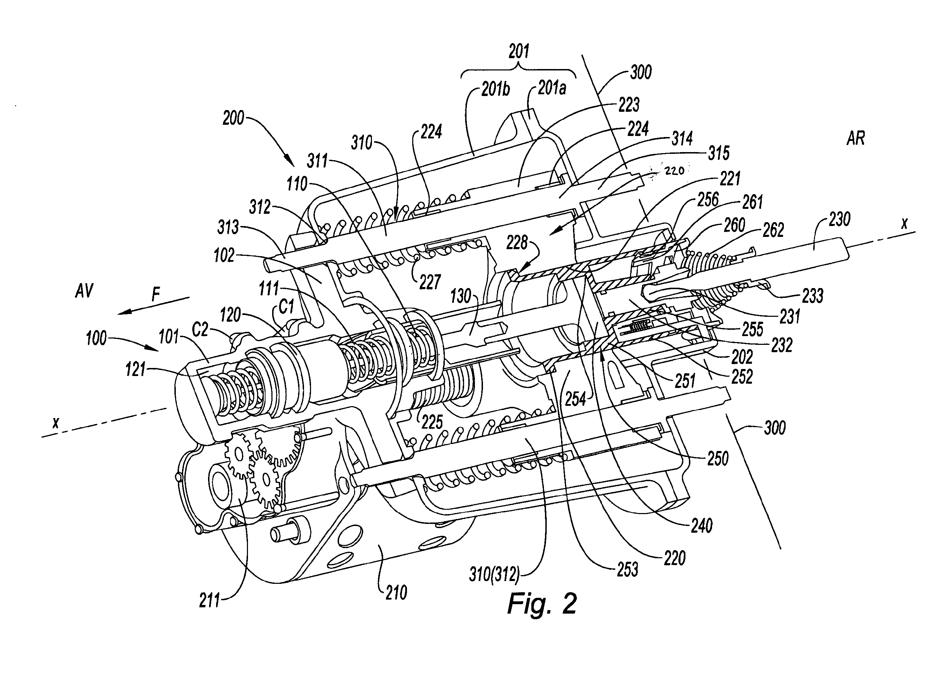

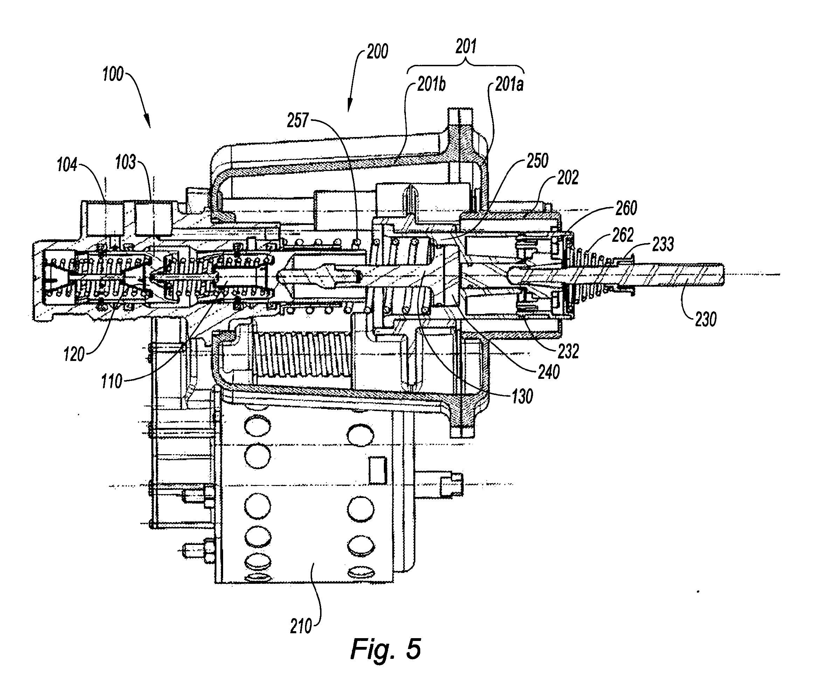

Selon les figures 1 et 2, le système de freins à maître-cylindre assisté par un servofrein électrique se compose d'un maître-cylindre 100 relié à un servofrein électrique 200 muni d'un actionneur composé d'un moteur électrique 210 et d'un réducteur 211 commandant le mouvement de translation du piston d'actionneur 220 logé dans un boîtier 201 et agissant sur le maître-cylindre 100 dans le sens du freinage (F). Le maître-cylindre 110 est ici un maître-cylindre tandem dont le boîtier 101, comporte deux entrées 103, 104 (figure 5) dans sa partie supérieure pour recevoir les deux sorties du réservoir de liquide de frein. Sur le côté, les deux chambres 111, 121 délimitées l'une par le piston primaire 110 et l'autre par le piston secondaire 120, sont reliées aux deux circuits de frein C1, C2. Les coupelles (joints) associées aux deux pistons ainsi que le piston secondaire et les ressorts sont représentés en relief au-delà du plan de coupe à la figure 2.

Par convention, le côté avant (AV) du servofrein 200 est le côté recevant le maître-cylindre 100 et le côté arrière (AR), celui tourné vers le tablier 300 et recevant la tige de commande 230.

Le maître-cylindre tandem 100 d'axe XX est relié au boîtier 201 du servofrein électrique 200 par deux tirants 310 servant à fixer l'ensemble (100, 200) au tablier 300 du véhicule. La figure 1 montre également la tige de commande 230 reliée à la pédale de frein et le moteur électrique 210 fixé à la bride 213 du boîtier 212 du réducteur 211 dont le couvercle est enlevé. Le boîtier 212 est lui-même fixé au boîtier 201 du servofrein par des moyens non représentés.

De façon plus détaillée, la vue en trois dimensions, coupée par un plan médian de la figure 2, utilisant l'orientation traditionnelle selon laquelle le maître-cylindre 100 est placé devant le servofrein 200, montre le maître-cylindre tandem 100 et le boîtier 201 du servofrein électrique 200 assemblés ; ils sont reliés par les deux tirants 310 identiques et dans des positions symétriques par rapport à l'axe XX qui assurent, d'un côté, la liaison entre le maître-cylindre tandem 100 et le boîtier 201 et de l'autre, la fixation de l'ensemble (100, 200) au tablier 300.

Le piston primaire 110 est relié au piston d'actionneur 220 par une tige de poussée 130 appuyée sur le disque de réaction 240, logé dans le moyeu 251 du piston d'assistance 250. Celui-ci se compose d'un manchon cylindrique 252 muni à l'avant d'une collerette d'entraînement 253 pour coopérer avec le piston d'actionneur 220 ; le manchon cylindrique 252 coulisse dans un alésage 221 du piston d'actionneur 220 suivant l'axe XX.

Le moyeu 251 du piston d'assistance 250 se poursuit au-delà du logement 254 du disque de réaction 240 par un cylindre de guidage 255 pour un piston plongeur 232. Ce dernier (232) est relié à la tête 231 en forme de rotule de la tige de commande 230 pour permettre un débattement angulaire de la tige de commande par rapport à l'axe XX.

Une coupelle à ressort 260 est enclipsée par des pattes 261 dans une gorge 256 à l'arrière du manchon cylindrique 252 du piston d'assistance 250 ; elle s'appuie contre le bord du manchon 252 pour recevoir une extrémité d'un ressort de rappel 262 s'appuyant par son autre extrémité contre une butée 233 solidaire de la tige de commande 230 de façon à rappeler le piston plongeur 232 dans sa position neutre définissant le saut S (intervalle de consigne) par rapport au disque de réaction dans la position de repos.

Le capteur de déplacement associé au piston plongeur 232 pour commander la mise en oeuvre du moteur 210 du servofrein 200 n'est pas détaillé. Il s'agit par exemple d'un capteur magnétique.

Le piston d'actionneur 220 qui reçoit le piston d'assistance 250 a un corps globalement à section en forme de triangle isocèle renversé, dans un plan perpendiculaire à l'axe XX, dont le sommet est occupé par un écrou 222 de vis à billes et les deux extrémités de la base ont chacune un manchon de guidage 223. Les deux manchons 223 symétriques par rapport à l'axe XX du maître-cylindre tandem 100, sont montés coulissant sur une longueur formant une colonne de guidage 311 des deux tirants 310. Les manchons de guidage 223 allongés qui dépassent vers l'avant du corps du piston d'actionnement 220, sont munis à chaque extrémité d'un coussinet 224 favorisant le glissement sur les colonnes de guidage 311. L'écrou 222 de la vis à billes coopère avec une vis 225 reliée à l'axe de sortie du réducteur 211. Ce système d'entraînement est déporté par rapport à l'axe XX ; la vis 225 entrainée en rotation mais bloquée en translation dans des paliers 226 à chacune de ses extrémités assure le déplacement en translation et donc aussi le guidage de l'écrou 222 solidaire en rotation mais libre en translation et intégré au corps du piston d'actionneur 220.

Chaque tirant 310, parallèle à l'axe XX du maître-cylindre tandem 110 composé de la partie cylindrique formant la colonne de guidage 311 se poursuit du côté avant par un épaulement 312 et une partie filetée 313 sur laquelle s'appuie et se fixe la bride 102 du boîtier 101 du maître-cylindre tandem. L'autre extrémité du tirant 310 comporte une collerette 314 pour s'appuyer contre le fond 201a du boîtier 201 et le traverser par une extrémité filetée 315 qui passe dans le tablier 300 pour y fixer l'ensemble (100, 200).

Chaque manchon de guidage 223 forme du côté avant AV, un épaulement recevant l'extrémité d'un ressort de rappel 227 emmanché sur la colonne 311 du tirant 310 et s'appuyant contre le couvercle 201b du boîtier 201.

Dans le piston d'actionneur 220, l'alésage de guidage 221 du piston d'assistance 250 est de forme étagée, constituant un épaulement 228 pour recevoir le piston d'assistance 250 et s'appuyer contre sa collerette 253 pour l'entraîner avec la tige de poussée 130. Le piston d'assistance 250 peut aussi avancer librement dans le piston d'actionneur 220 dans le sens du freinage (F) en cas de défaillance de l'assistance.

L'ensemble est ainsi assemblé par les deux tirants 310 selon un montage symétrique par rapport à l'axe XX qui est celui du piston d'assistance 250 et celui du piston d'actionneur 220, tout en garantissant un bon fonctionnement grâce à la longueur des manchons de guidage 223 et cela malgré le déport de la vis à billes 222, 225 par rapport à l'axe XX.

Le boîtier 201 portant le maître-cylindre tandem 100 et le moyen d'entraînement (210, 211) et logeant le piston d'actionneur 220 est formé d'un fond 201a et d'un couvercle 201b, appuyés l'un contre l'autre par leur bride. Le fond de forme relativement plate entoure l'axe XX par un manchon 202 en forme de pot, dans lequel arrive le piston d'actionneur 220 et que traverse l'extrémité de la tige de commande 230. Le couvercle 201b, pratiquement de même longueur que les colonnes de guidage 311, est de forme sensiblement tronconique, enveloppant les deux tirants 310 et la vis 225.

Le couvercle 201b s'appuie contre le fond 201a par sa bride et les deux tirants 310 assurent l'écartement par leurs épaulement et collerette 313, 314.

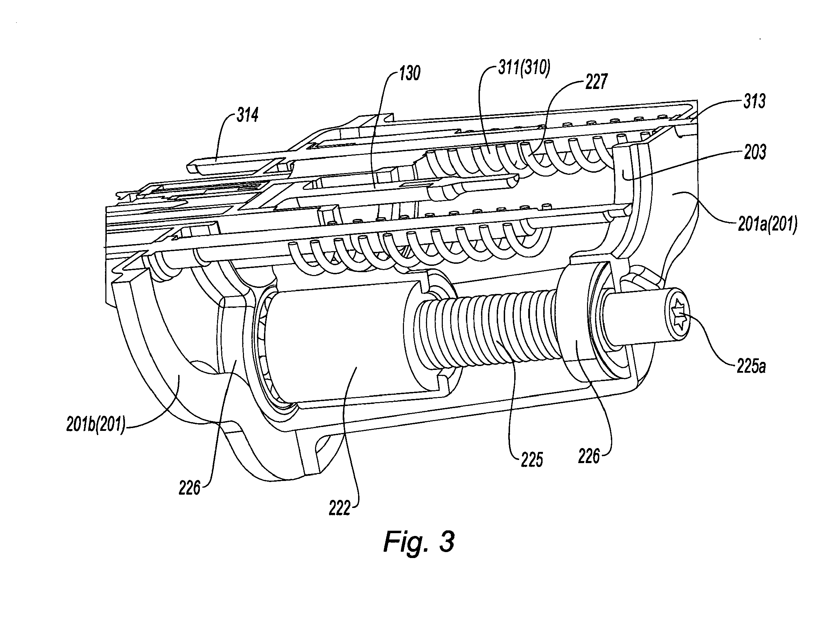

La figure 3 est une vue en coupe à la fois par un plan médian et par un plan perpendiculaire à celui-ci, du boîtier 201 sous un angle différent de celui de la figure 2. Elle montre le montage de la vis 225 dans deux paliers à roulement 226, ainsi que l'ouverture 203 pour le passage et la fixation de l'arrière du maître-cylindre tandem, l'ensemble étant vu à partir de l'avant. Le boîtier du maître-cylindre 100 comporte, à l'arrière, une couronne d'appui derrière sa bride 102 pour se fixer dans l'ouverture 203 du couvercle 201b.

L'extrémité en saillie de la vis 225 comporte un logement cannelé 225a pour réaliser une liaison par la forme pour son entraînement avec la sortie du réducteur 211 non représenté dans cette figure.

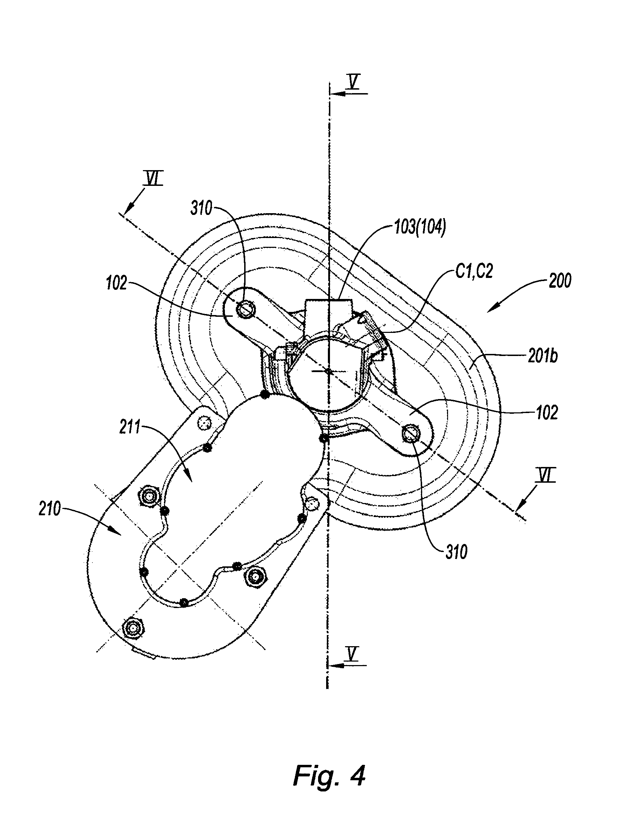

La figure 4 montre, en vue de face, le maître-cylindre tandem 100 et le couvercle 201b du servofrein 200 ainsi que le réducteur 211 avec sa bride 212 portant le moteur électrique 210.

La position représentée avec le plan de coupe V-V vertical est la position d'installation du servofrein dans le véhicule, les entrées 101, 104 du maître-cylindre étant verticales pour recevoir le réservoir.

Deux pattes formant la bride 102 du maître-cylindre 100 servent à sa fixation par les tirants 310.

La figure 5 est une vue en coupe selon le plan vertical V-V de la figure 4 laissant apparaître, les différents éléments constituant le système de frein avec le maître-cylindre tandem 100 à l'avant portant le servofrein électrique 200 selon l'axe XX, le moteur 210, le réducteur 211 en sortie de moteur et la vis 225 de l'entraînement par la vis à billes du piston d'actionneur 220 ainsi que le piston d'assistance 250 et les différents éléments logés dans le piston d'assistance.

Dans cet exemple, il y a notamment le ressort de rappel 257 du piston d'assistance 250.

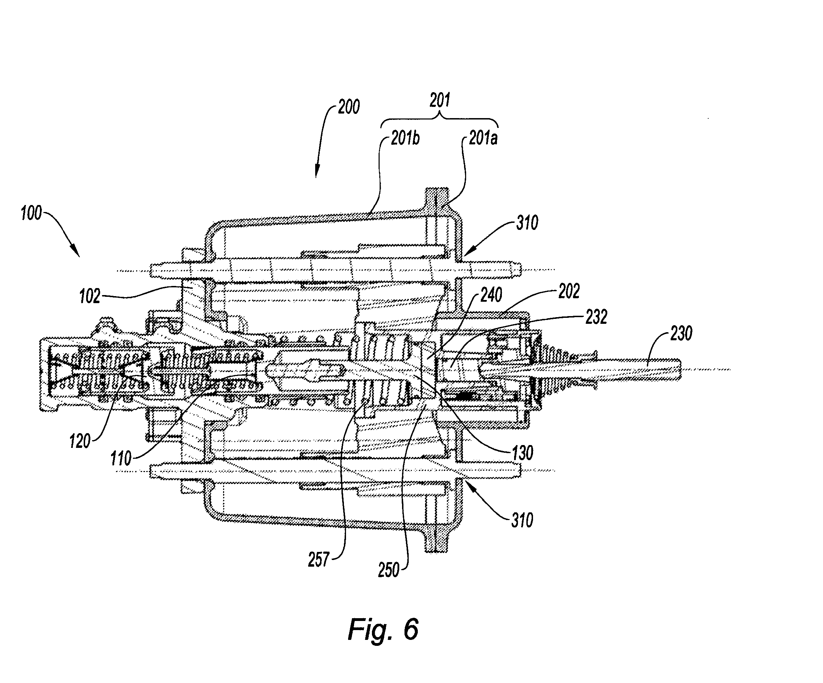

La figure 6 est une vue en coupe selon VI-VI de la figure 4 montrant tout particulièrement la forme des tirants 310 et celle des manchons 223 du piston d'actionneur 220, guidés sur les colonnes.

En résumé, la présente invention concerne des applications à l'industrie des systèmes de freins de véhicules automobiles.

### NOMENCLATURE

| | |
|---|---|
| 100 | maître-cylindre tandem |
| 101 | boitier |
| 102 | bride |
| 103, 104 | entrée du maître-cylindre |
| 105 | couronne |
| | |
| 110 | piston primaire |
| 111 | chambre du piston primaire |
| | |
| 120 | piston secondaire |
| 121 | chambre du piston secondaire |
| | |
| 130 | tige de poussée |
| | |
| 200 | servofrein |
| 201 | boitier du servofrein |
| 201a | fond |
| 201b | couvercle |
| 202 | manchon du fond |
| 203 | ouverture du couvercle |
| | |
| 210 | moteur électrique |
| 211 | réducteur |
| 212 | boîtier du réducteur |
| 213 | bride du boitier |
| | |
| 220 | piston d'actionneur |
| 221 | alésage |
| 222 | écrou |
| 223 | manchon de guidage |
| 224 | coussinet |
| 225 | vis de la vis à billes |
| 225 | logement cannelé |
| 226 | palier |
| 227 | ressort de rappel |
| 228 | épaulement |
| | |
| 230 | tige de commande |
| 231 | tête |
| 232 | piston plongeur |
| 233 | butée |
| | |
| 240 | disque de réaction |
| | |
| 250 | piston d'assistance |
| 251 | moyeu |
| 252 | manchon cylindrique |
| 253 | collerette d'entrainement |
| 254 | logement du disque de réaction |
| 255 | cylindre de guidage |
| 256 | gorge |
| 257 | ressort de rappel |
| | |
| 260 | coupelle à ressort |
| 261 | patte |
| 262 | ressort de rappel |
| 263 | butée |
| | |
| 300 | tablier |
| | |
| 310 | tirant |
| 311 | colonne de guidage |
| 312 | épaulement |
| 313 | partie filetée |
| 314 | collerette |
| 315 | partie filetée |

## Revendications

1. Système de freins comprenant un servofrein (200) à moteur électrique entraînant la tige de poussée (130) du piston (110) du maître-cylindre (100) par une liaison par une vis à billes et actionné par une tige de commande (230) reliée à la pédale de frein,
le servofrein (200) comprenant dans son boîtier (201) relié au maître-cylindre (100) un piston d'actionneur (220)
- guidé en translation par au moins deux colonnes de guidage (311), parallèles à l'axe (XX) du maître-cylindre (100),
- entrainé en translation par une vis à billes (225, 226) dont la vis (225), déportée par rapport à l'axe (XX) du maître-cylindre (100), est entrainée par le moteur (210) et coopère avec un écrou (226) solidaire en translation du piston d'actionneur (220), et
- un alésage (221) du piston actionneur (220) dans l'axe (XX) reçoit un piston d'assistance (250) muni d'un disque de réaction (240) et d'un piston plongeur (232) relié à la tige de commande (230), et
- des ressorts de rappel (227) montés sur les colonnes de guidage (311) entre le boîtier (201) du servofrein (200) et le manchon de guidage (223) du piston d'actionneur et/ou un ressort de rappel (257) appliqué au piston d'assistance (250).

2. Système de freins selon la revendication 1,
**caractérisé en ce que**
les deux colonnes de guidage (311) parallèles à l'axe (XX) du système sont constituées par des tirants (310) traversant le boîtier (201) du servofrein (200) pour fixer d'un côté le maître-cylindre (100) sur le servofrein (200) et de l'autre, l'ensemble constitué par le maître-cylindre (100) et le servofrein (200) au tablier (300)du véhicule.

3. Système de freins selon la revendication 1,
**caractérisé en ce que**
l'alésage (221) du piston d'actionneur (220) comporte un épaulement (228) à son entrée côté avant et le piston d'assistance (250) comporte une collerette d'appui (253) pour être poussée dans le sens du freinage (F) par le piston d'actionnement (220).

4. Système de freins selon la revendication 1,
**caractérisé en ce que**
le piston d'actionneur (220) a un corps de section sensiblement triangulaire dans un plan perpendiculaire à l'axe (XX) dont le sommet est occupé par l'écrou (226) de la vis à billes et les extrémités de la base, par des manchons de guidage (223) coulissant sur les colonnes de guidage (311).

5. Système de freins selon la revendication 1,
**caractérisé en ce que**
le servofrein (200) comporte un boîtier (201) formé d'un fond (201a) et d'un couvercle (201b) et les tirants (310) comportent un épaulement (212) et une collerette (214) près de chacune des extrémités au-delà de la partie formant la colonne de guidage (311) pour s'appuyer d'un côté contre l'intérieur du couvercle (201b) et de l'autre, contre l'intérieur du fond (201a) et ces tirants (310) se poursuivent au-delà de l'épaulement et de la collerette par des parties filetées (313, 315).

6. Système de freins selon la revendication 1,
**caractérisé en ce que**
le piston d'assistance (250) comporte un moyeu (251) avec un manchon cylindrique (255) dans l'axe (XX) recevant le piston plongeur (232).

7. Système de freins selon la revendication 6,
**caractérisé par**
une coupelle à ressort (260) accrochée à l'extrémité arrière du piston d'assistance (250) pour un ressort de rappel (262) du piston plongeur (232), ce ressort s'appuyant également sur une collerette formant butée (233) solidaire de la tige de commande (230) pour rappeler le piston plongeur (232) en appui arrière définissant le saut par rapport au disque de réaction (240) lorsque le servofrein est en position de repos..

8. Système de freins selon la revendication 4,
**caractérisé en ce que**
les deux colonnes de guidage (311) sont symétriques par rapport à l'axe (XX).

## Patentansprüche

1. Bremssystem, das einen Bremskraftverstärker (200) mit Elektromotor enthält, der die Schubstange (130) des Kolbens (110) des Hauptzylinders (100) durch eine Verbindung über eine Kugelumlaufspindel antreibt und von einer mit dem Bremspedal verbundene Steuerstange (230) betätigt wird,
wobei der Bremskraftverstärker (200) in seinem mit dem Hauptzylinder (100) verbundenen Gehäuse (201) einen Aktorkolben (220) enthält,
- der in Translationsrichtung von mindestens zwei Führungssäulen (311) parallel zur Achse (XX) des Hauptzylinders (100) geführt wird,
- in Translationsrichtung von einer Kugelumlaufspindel (225, 226) angetrieben wird, deren Spindel (225), versetzt bezüglich der Achse (XX) des Hauptzylinders (100), vom Motor (210) angerieben wird und mit einer Mutter (226) zusammenwirkt, die in Translationsverschiebung fest mit dem Aktorkolben (220) verbunden ist, und
- eine Bohrung (221) des Aktorkolbens (220) in der Achse (XX) einen Hilfskolben (250) aufnimmt, der mit einer Reaktionsscheibe (240) und mit einem Tauchkolben (232) versehen ist, der mit der Steuerstange (230) verbunden ist, und
- Rückstellfedern (227), die auf die Führungssäulen (311) zwischen dem Gehäuse (201) des Bremskraftverstärkers (200) und der Führungsmuffe (223) des Aktorkolbens montiert sind, und/oder eine an den Hilfskolben (250) angewendete Rückstellfeder (257).

2. Bremssystem nach Anspruch 1, **dadurch gekennzeichnet, dass** die zwei Führungssäulen (311) parallel zur Achse (XX) des Systems aus zwei Zugstangen (310) bestehen, die das Gehäuse (201) des Bremskraftverstärkers (200) durchqueren, um auf einer Seite den Hauptzylinder (100) am Bremskraftverstärker (200) und auf der anderen Seite die aus dem Hauptzylinder (100) und dem Bremskraftverstärker (200) bestehende Einheit an der Spritzwand (300) des Fahrzeugs zu befestigen.

3. Bremssystem nach Anspruch 1, **dadurch gekennzeichnet, dass** die Bohrung (221) des Aktorkolbens (220) eine Schulter (228) an ihrem Eingang auf der Vorderseite aufweist, und der Hilfskolben (250) einen Auflagekragen (253) aufweist, um vom Aktorkolben (220) in Richtung des Bremsens gedrückt zu werden.

4. Bremssystem nach Anspruch 1, **dadurch gekennzeichnet, dass** der Aktorkolben (220) einen Körper mit im Wesentlichen dreieckigem Querschnitt in einer Ebene lotrecht zur Achse (XX) hat, dessen Scheitel von der Mutter (226) der Kugelumlaufspindel und die Enden der Basis von Führungsmuffen (223) eingenommen werden, die auf den Führungssäulen (311) gleiten.

5. Bremssystem nach Anspruch 1, **dadurch gekennzeichnet, dass** der Bremskraftverstärker (200) ein Gehäuse (201) aufweist, das von einem Boden (201a) und von einem Deckel (201b) geformt wird, und die Zugstangen (310) eine Schulter (312) und einen Kragen (314) nahe jedem der Enden jenseits des die Führungssäule (311) bildenden Teils aufweist, um sich auf einer Seite gegen das Innere des Deckels (201b) und auf der anderen gegen das Innere des Bodens (201a) zu drücken, und diese Zugstangen (310) sich über die Schulter und den Kragen hinaus durch Gewindeteile (313, 315) fortsetzen.

6. Bremssystem nach Anspruch 1, **dadurch gekennzeichnet, dass** der Hilfskolben (250) eine Nabe (251) mit einer zylindrischen Muffe (255) in der Achse (XX) aufweist, die den Tauchkolben (232) aufnimmt.

7. Bremssystem nach Anspruch 6, **gekennzeichnet durch** einen Federteller (260), der am hinteren Ende des Hilfskolbens (250) für eine Rückstellfeder (262) des Tauchkolbens (232) befestigt ist, wobei diese Feder sich ebenfalls auf einen Kragen auflegt, der einen fest mit der Steuerstange (230) verbundenen Anschlag (233) formt, um den Tauchkolben (232) in die hintere Auflage zurückzustellen, was den Sprung bezüglich der Reaktionsscheibe (240) definiert, wenn der Bremskraftverstärker in der Ruhestellung ist.

8. Bremssystem nach Anspruch 4, **dadurch gekennzeichnet, dass** die zwei Führungssäulen (311) bezüglich der Achse (XX) symmetrisch sind.

## Claims

1. Braking system comprising a brake booster (200) with electric motor driving the push rod (130) of the piston (110) of the master cylinder (100) via a ballscrew connection and actuated by a control rod (230) connected to the brake pedal,
the brake booster (200) comprising in its casing (201) connected to the master cylinder (100) an actuator piston (220)
- guided in translational movement by at least two guide pins (311) which are parallel to the axis (XX) of the master cylinder (100),
- driven in translational movement by a ball screw (225, 226) of which the screw (225), which is offset with respect to the axis (XX) of the master cylinder (100), is driven by the motor (210) and collaborates with a nut (226) translationally as one with the actuator piston (220), and
- a bore (221) of the actuator piston (220) on the axis (XX) receives a boost piston (250) equipped with a reaction disc (240) and with a plunger piston (232) connected to the control rod (230), and
- return springs (227) mounted on the guide pins (311) between the casing (201) of the brake booster (200) and the guide sleeve (223) of the actuator piston and/or a return spring (257) applied to the boost piston (250).

2. Braking system according to Claim 1,
**characterized in that**
the two guide pins (311) parallel to the axis (XX) of the system consist of through-bolts (310) passing through the casing (201) of the brake booster (200) in order on the one side to attach the master cylinder (100) to the brake booster (200), and on the other, to attach the assembly consisting of the master cylinder (100) and the brake booster (200) to the bulkhead (300) of the vehicle.

3. Braking system according to Claim 1,
**characterized in that**
the bore (221) of the actuator piston (220) comprises a shoulder (228) at its entrance at the front side and the boost piston (250) comprises a bearing flange (253) so that it can be pushed in the direction of braking (F) by the actuator piston (220).

4. Braking system according to Claim 1,
**characterized in that**
the actuator piston (220) has a body of substantially triangular cross section in a plane perpendicular to the axis (XX), of which triangle the vertex is occupied by the nut (226) of the ball screw and the ends of the base are occupied by guide sleeves (223) sliding on the guide pins (311).

5. Braking system according to Claim 1,
**characterized in that**
the brake booster (200) comprises a casing (201) formed by an end wall (201a) and a cover (201b) and the through-bolts (310) comprise a shoulder (312) and a flange (314) near each of the ends beyond the part forming the guide pin (311) so as to bear on one side against the inside of the cover (201b) and on the other against the inside of the end wall (201a), and these through-bolts (310) continue beyond the shoulder and the flange as threaded portions (313, 315).

6. Braking system according to Claim 1,
**characterized in that**
the boost piston (250) comprises a hub (251) with a cylindrical sleeve (255) on the axis (XX) accepting the plunger piston (232).

7. Braking system according to Claim 6,
**characterized by**
a spring cup (260) attached to the rear end of the boost piston (250) for a return spring (262) of the plunger piston (232), this spring also bearing against a flange that forms an end stop (233) secured to the control rod (230) so as to return the plunger piston (232) against its back stop defining the jump with respect to the reaction disc (240) when the brake booster is in the rest position.

8. Braking system according to Claim 4,
**characterized in that**
the two guide pins (311) are symmetric with respect to the axis (XX).
